# EUROPEAN PATENT APPLICATION

(11) **EP 0 573 688 A1**
(43) Date of publication of application: **15.12.1993**
(21) Application number: 92109751.5
(22) Date of filing: 10.06.1992
(51) Int. Cl.: B65G 45/12

(54) **Conveyor belt precleaner**

(71) Applicant: Anttonen, Raine, SF-15900 Lahti (FI); ROXON KOMPONENTIT OY, SF-15860 Hollola 2 (FI)
(72) Inventor: Anttonen, Raine, SF-15900 Lahti (FI); ROXON KOMPONENTIT OY, SF-15860 Hollola 2 (FI)
(74) Representative: Zipse + Habersack

(57) **Abstract**

The invention concerns a conveyor belt precleaner, comprising a bearing element (4,5) and a cleaner element (1) attached to it and provided with a doctor blade (3). The precleaner is provided with mounting and adjustment parts (6-8) by means of which the bearing element of the precleaner is attached to the frame of the conveyor. The cleaner element (1) consists of at least two separate parts, one of which is a blade mount (2) and the other a blade part (3), the latter being essentially small in cross-section in end view as compared to the cross-section of the whole cleaner element (1) in end view. The visible portion of the blade part is of a size substantially corresponding to the part subject to wear.

## Description

The present invention relates to a precleaner for a conveyor belt, comprising at least one bearing element and one cleaner element mounted on the bearing element and provided with at least one doctor blade, and mounting and adjustment parts by means of which the bearing element of the precleaner is attached to the frame of the conveyor.

Conveyor belt precleaners are generally of a shaving type, having doctor blades made of rubber or plastics, e.g. polyurethane. The doctor blades are are usually attached to the bearing element either with bolts or directly to a mounting slide provided in the bearing element. In this type of precleaner, the bearing element consists of a tubular part which is always placed in a transverse position relative to the direction of belt motion, its ends being rotatably mounted on supporters. Moreover, the supporter of the precleaner is provided with a mechanism applying a rotating force to the bearing tube, causing the doctor blades to be tensioned and pressed against the belt across its width. As the belt moves, the blades remove the material remaining on the belt surface, directing it back into the material flow.

Generally, it can be seen from the cross-section of the blade part and main frame of the precleaner that the blade part is usually relatively large as compared to the whole cross-sectional area and to that part of the blade which is subject to wear. This involves certain obvious drawbacks, e.g. the fact that the customer has to buy a great deal more of blade material than he can use and to throw away material that cannot be used again because the blades are mostly made of rubber or polyurethane, which is a thermosetting plastic. In addition, in paper industry, enormous expenses are incurred in cases where the pulp is spoiled by a blade dropped into the pulp being conveyed.

The object of the present invention is to eliminate the drawbacks referred to and to achieve a precleaner that is advantageous and safe to use and reduces waste of non-reusable raw material.

The conveyor belt precleaner of the invention is characterized by what is presented in the claims.

The fact that the doctor blade of the precleaner is not attached directly to the bearing element but to a flexible mount involves many advantages. One of them is that the blade part is small, corresponding to the size required by blade wear, and provides a correct distance as well as a correct angle of contact between the blade and the belt. Moreover, the blade can be made of a wear resistant material whereas the mount can be made of some other, more flexible material. The flexible mount also ensures that the doctor blade will follow the belt surface in all circumstances and, as the cleaner element undergoes slight deformations during the operation, prevents the material removed from being clodded and sticking to the cleaner.

Another advantage of the invention is that the blades and flexible mounts can be interlocked with the conveyor frame or some other suitable object in such a way that they cannot be wrenched off and carried into the process e.g. in the case of a belt fault. The flexible mount is provided with a longitudinal hole extending through the mount and with another similar hole placed further up. The latter hole is aligned with corresponding longitudinal holes in the blade when the latter is in place on the mount. Through these holes goes a wire cable or equivalent on which the mount and the blades will remain dangling in a disturbance situation like the one referred to.

In the following, the invention is described by the aid of an example by referring to the attached drawings, in which
- Fig. 1: presents a side view of a precleaner with new blades,
- Fig. 2: presents a side view of a precleaner with worn-out blades,

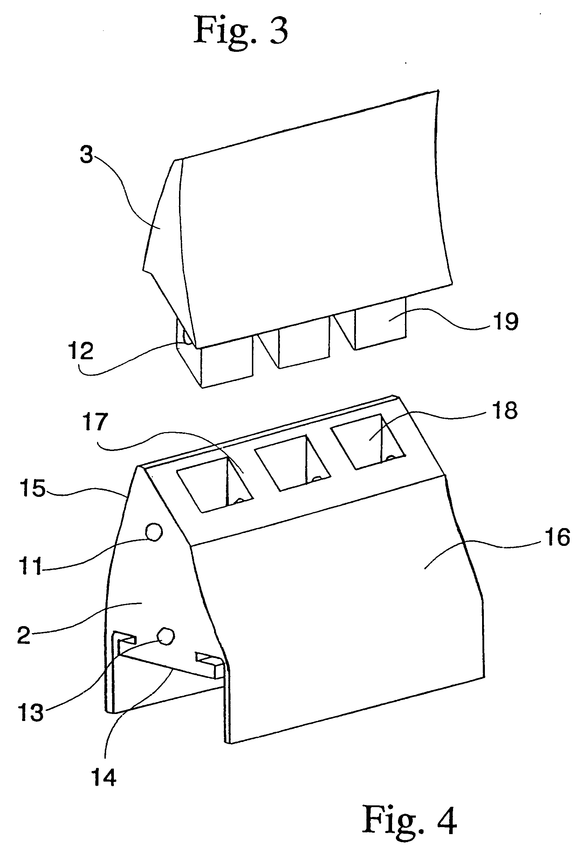

- Fig. 3: presents the doctor blade of a precleaner according to Fig. 1, and
- Fig. 4: presents a flexible mount for the doctor blades of a precleaner according to Fig. 1.

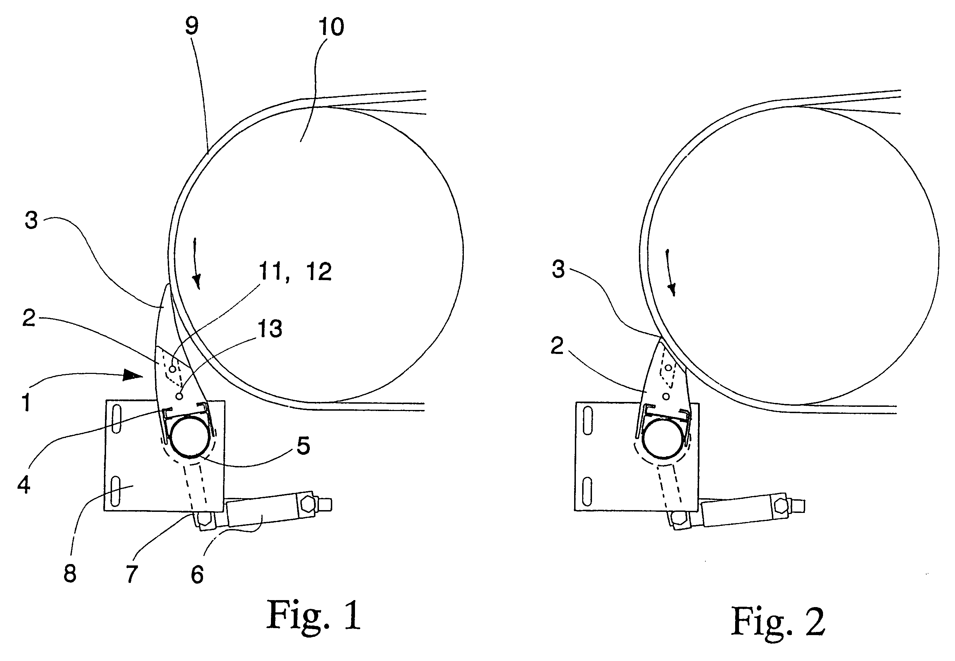

The delivery-end conveyor drum 10, on which a precleaner like that of the invention is normally placed, is provided with bearings supporting it on the conveyor frame. In Fig. 1, the conveyor belt 9 runs counterclockwise over the drum 10 as indicated by the small curved arrow. The precleaner is so placed that the doctor blades 3 are pressed against the belt 9 at a point somewhat below the middle line of the delivery drum 10. The precleaner is mounted by means of plates 8 either on the conveyor frame or on a discharge funnel placed in front of the drum 10. The mounting plates 8 are provided with a spring mechanism 6 which presses the doctor blades 3 against the belt 9 with a preadjusted force by means of a lever 7, the bearing tube 5 and a mounting rail 4. The mounting rail, which has a cross-sectional form e.g. as shown in Fig. 1, is mounted on top of the bearing tube and is parallel to it. The flexible blade mounts 2 are detachably mounted on the mounting rails 4. The latter may have a suitable shape other than that shown in Fig. 1.

The cleaner element 1 itself is of a width equal to or somewhat less than that of the belt 9. The cleaner element consists of a flexible mount 2 and a doctor blade 3 mounted on top of it. The lower part of the mount is provided with fixing elements, e.g. longitudinal grooves permitting slide mounting and having a shape corresponding to the cross-sectional form of the mounting rail 4. The mount 4 and the doctor blade 3 may have a width equal to that of the cleaner element 1 itself, although better cleaning results will be achieved if the flexible mount 2 and the blade 3 are of equal width, e.g. 150 mm, and if there are several of them across the width the belt. Good results will also be achieved with a precleaner having a blade mount 2 of a width equal to that of the cleaner element 1 and accommodating several blades 3 of a lesser width, e.g. 150 mm, placed side by side on the mount.

The flexible mount 2 is attached to the bearing tube 5 by a profiled element 14 fitting onto the mounting rail 4. In this embodiment, only a C-profile element and a corresponding C-profile mountig rail 4 in Fig. 1 and 2 are presented. The mounting rail 4 may be a profiled bar of any type that permits attachment of the flexible mount 2 by means of a corresponding profiled element.

The blade 3 and mount 2 form a whole. Depending on its width, the blade 3 is provided with one or more tenons 19 which are inserted into corresponding mortises 18 in the upper part of the flexible mount 2. The tenons protrude downwards from the lower surface of the blade and they are of a rectangular or square sectional form. The sectional form of the tenons 19 may vary, so it can be selected in each case on the basis of the manufacturing technique and the reliability of the joint. The mount 2 is preferably provided with partitions 17 to maximize the area of the contact surface between the mount 2 and the blades 3. Moreover, the partitions 17 lend solidity to the structure, ensuring that the tenons 19 of the blades 3 will not push the walls 15 and 16 of the mount 2 apart so that the blades 3 might be loosened in an uncontrolled manner.

The mount 2 is provided with two longitudinal holes 11 and 13. Hole 11 extends through the mortises 18 and is aligned with the holes 12 in the blades 3 when the latter are in place with the tenons in the mortises 18. These holes allow e.g. a steel wire cable to be passed through the assembly, the ends of the wire cable being fastened to the conveyor frame. This ensures that the blades 3 and blade mounts 2 will not be dropped into the process material under any circumstances, thus avoiding the big trouble that would result from such an event.

It is obvious to a person skilled in the art that the invention is not restricted to the examples described above, but that its embodiments may be varied within the scope of the claims presented below. Thus, for instance, besides a square or rectangular form, the cross-section of the tenons 19 and mortises 18 may be a circle, ellipse, parallelogram or a trapezoid.

## Claims

1. Conveyor belt precleaner, comprising at least one bearing element (4,5) and at least one cleaner element (1) attached to the bearing element and provided with at least one doctor blade (3), said precleaner being provided with mounting and adjustment parts (6-8) by means of which the bearing element of the precleaner is attached to the frame of the conveyor, **characterized** in that the cleaner element (1) consists of at least two separate parts, one of which is a blade mount (2) and the other a blade part (3), the latter being essentially small in cross-section in end view as compared to the cross-section of the whole cleaner element (1) in end view, the visible portion of the blade part being of a size substantially corresponding to the part subject to wear.

2. Precleaner according to claim 1, **characterized** in that the blade mount (2) is of a flexible structure and that the upper part of the mount is provided with one or more mortises (18) for tenons (19) provided in the lower part of the blades (3).

3. Precleaner according to claim 1 or 2, **characterized** in that the flexible mount (2) is provided with longitudinal holes (11 and 13) extending through the mount, and that the blade (3) is provided with a hole (12) extending through it and placed in a location corresponding to hole (11), a wire cable for safety locking being passed through said holes.

4. Precleaner according to claim 1, 2 or 3, **characterized** in that the mortises (18) and tenons (19) are of a square cross-sectional form.

5. Precleaner according to any one of the preceding claims, **characterized** in that there are partitions (17) between the mortises of the flexible blade mount (2) that keep the front side (15) and back side (16) of the mount (2) firmly together.

6. Precleaner according to any one of the preceding claims, **characterized** in that the upper surface of the blade mount (2) is substantially adapted to the outer circumference of a conveyor drum (10).

7. Precleaner according to one of the preceding claims, **characterized** in that the blade mounts (2) are detachably mounted on a bearing tube (5).

8. Precleaner according to claim 7, **characterized** in that a mounting rail (4)is provided for slidably mounting of the blade mounts (2) of the bear ring tube (5).
